# FASCICULE DE BREVET EUROPEEN

(11) **EP 1 207 943 B1**
(45) Date de publication et mention de la délivrance du brevet: **03.11.2004**
(21) Numéro de dépôt: 99938069.4
(22) Date de dépôt: 04.08.1999
(51) Int. Cl.: A62D 3/00

(54) **PROCEDE ET DISPOSITIF DE TRAITEMENT DE POUSSIERES DE PURGE D'USINE CIMENTIERE**
VERFAHREN UND VORRICHTUNG ZUM BEHANDELN VON ENTLÜFTUNGSSTAUB AUS ZEMENTHERSTELLUNG
METHOD AND DEVICE FOR TREATING PURGE DUST FROM CEMENT PRODUCTION

(43) Date de publication de la demande: 29.05.2002
(73) Titulaire: S.A. CIMENTERIES CBR CEMENTBEDRIJVEN N.V., 1170 Bruxelles (BE)
(72) Inventeur: FERAUGE, Hubert, B-7540 Quartes (BE); COLLEE, Jean-Benoît, B-4053 Embourg (BE)
(74) Mandataire: Claeys, Pierre
(86) Numéro de dépôt international: PCT/BE1999/000099
(87) Numéro de publication internationale: WO 2001/010503

(56) Documents cités:
- DE-A- 4 005 436
- DE-A- 4 317 338
- FR-A- 2 762 219
- FR-A- 2 770 159

## Description

La présente invention concerne un procédé de traitement d'une matière solide comprenant entre autres des composés calciques, le dit procédé comprenant une formation d'un mélange de la matière solide et d'eau.

Les poussières de purge, qui sont issues d'un processus de fabrication de clinker, peuvent poser des problèmes de recyclage liés à leurs compositions. En particulier, leur recyclage telles quelles dans le processus de production peut nécessiter dans certains cas des opérations supplémentaires pour diminuer de manière significative ta teneur en chlore jusqu'à un niveau acceptable.

Autant dans un but de respect de l'environnement que dans un but de saine gestion des matières, la déposante de la présente invention a recherché pour ces poussières de purge un procédé de traitement économique, qui puisse être directement mis en oeuvre à l'endroit où elles sont produites, qui, le cas échéant, puisse être intégré dans l'ensemble des processus de fabrication précitée et qui ne pose pas de nouveau problème.

A cet effet, le procédé de l'invention tel qu'indiqué au début, est caractérisé en ce que la matière solide est constituée de poussières de purge issues d'un processus de fabrication de clinker qui contiennent entre autres des composés chlorés solubles et en ce que le procédé comprend en outre:
- une séparation dudit mélange en une phase liquide , comprenant l'eau et entre autres les composés chlorés solubles extraits des poussières de purge, et une phase solide composée des matières non solubles dans l'eau, dont les composés calciques réhydratés,
- une réintroduction d'au moins une partie desdits composés calciques réhydratés dans ledit procédé de fabrication dudit clinker, et
- une neutralisation de la phase liquide séparée jusqu'à obtenir un pH souhaité par une mise en contact de la phase liquide avec un écoulement de gaz contenant du CO₂ résultant dudit processus de fabrication.

Après la neutralisation, la phase liquide peut alors être rejetée sans danger, le pH pouvant avoir été abaissé de 12,5 à 8,5. Il s'avère que, pour le mélange, un rapport pondéral (par exemple en kg/h) entre matière liquide et matière solide se situe entre 5/1 et 1,5/1 mais est avantageusement comprise entre 3/1 et 2/1 pour obtenir une bonne extraction des chlorures contenus dans les poussières de purge.

Le procédé de l'invention comprend une réintroduction, dans le processus de fabrication de clinker, d'au moins une partie de ladite phase solide. Ainsi, le volume des composés calciques réhydratés n'est pas perdu mais valorisé.

Un mode de réalisation du procédé de l'invention peut comprendre de plus, au cours de l'étape de séparation des phases liquide et solide, un lavage à l'eau et un essorage de la phase solide pour en retirer davantage les composés chlorés solubles, et une récupération de l'eau d'essorage mélangée à la phase liquide précitée, en vue de la neutralisation susdite.

L'homme de métier comprend que, dans le présent document, "eau" peut signifier un liquide principalement aqueux véhiculant des produits solubles, et même éventuellement insolubles.

Un autre mode de réalisation du procédé de l'invention peut comprendre, après une séparation au moins partielle susdite des phases liquide et solide, un lavage à l'eau et un essorage de la phase solide pour en retirer davantage les composés chlorés solubles, et une récupération séparée de l'eau d'essorage pour la réintroduire au moins en partie en tant qu'eau pour l'étape de mélange à la poussière de purge.

Comme le processus de fabrication de clinker susdit dégage un gaz contenant du CO₂, le procédé de l'invention comprend, pour la neutralisation précitée, une mise en contact dans un écoulement dudit gaz, de la phase liquide et, le cas échéant, d'au moins une partie de l'eau d'essorage.

La présente invention concerne également un dispositif pour la mise en oeuvre du procédé de traitement de matière solide selon l'invention, comprenant des moyens de mélange des poussières de purge à de l'eau.

A cet effet, le dispositif selon l'invention comprend en outre
- des moyens de séparation du mélange en une phase liquide, comprenant l'eau et entre autres les composés chlorés solubles, et une phase solide composée des matières non solubles dans l'eau, dont les composés calciques réhydratés,
- des moyens de réintroduction, dans le processus de fabrication dudit clinker, d'au moins une partie de ladite phase solide comprenant lesdits composés calciques réhydratées
- des moyens de neutralisation de la phase liquide séparée jusqu'à obtenir un pH souhaité comprenant une entrée pour la phase liquide et une entrée pour le gaz contenant du CO₂ résultant du procédé de fabrication du clinker.

Suivant une forme de réalisation de l'invention, le dispositif précité comporte en outre des moyens de lavage à l'eau de ladite phase solide, des moyens d'essorage de celle-ci, et des moyens de récupération de la phase liquide précitée et de l'eau d'essorage.

D'autres détails et particularités de l'invention ressortiront des revendications secondaires et de la description des dessins qui sont annexés au présent mémoire et qui illustrent, à titre d'exemples non limitatifs, le procédé et des formes de réalisation particulières du dispositif suivant l'invention.

La figure 1 montre un schéma de principe simplifié d'une forme de réalisation du dispositif de l'invention.

La figure 2 montre un schéma de principe simplifié d'une autre forme de réalisation du dispositif de l'invention.

La figure 3 montre un schéma de principe simplifié de moyens de neutralisation appropriés pour la mise en oeuvre de l'invention.

Dans les différentes figures, les mêmes notations de référence désignent des éléments identiques ou analogues.

Pour faciliter la compréhension du procédé de l'invention, et sans que cela puisse être considéré comme limitant la portée dudit procédé, il est d'abord décrit un dispositif de l'invention.

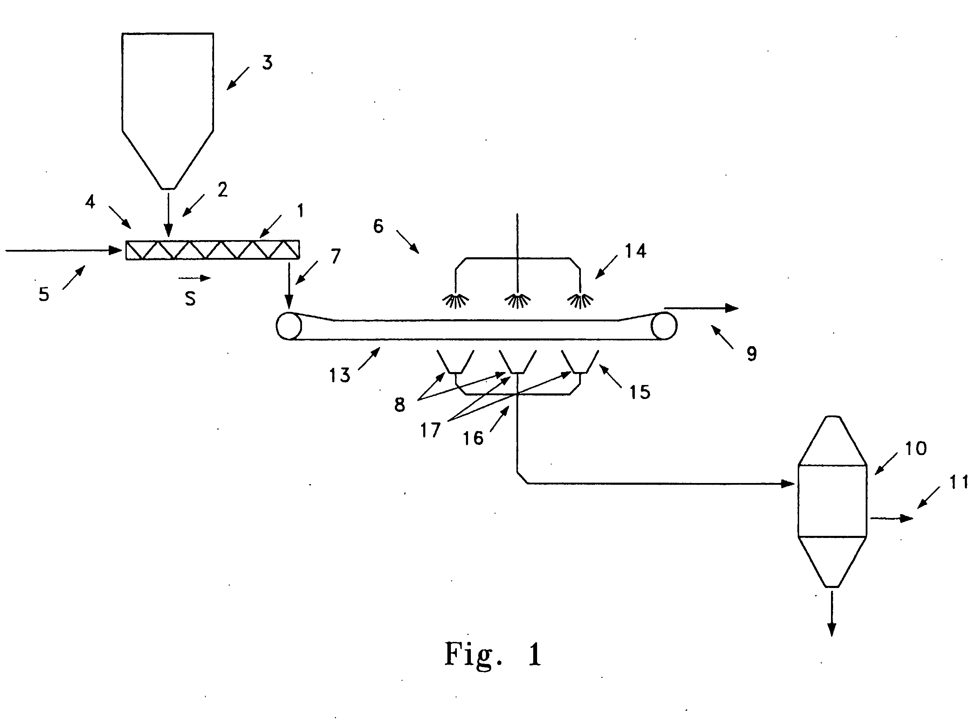

Le dispositif de l'invention (figure 1) peut comprendre (a) des moyens de mélange 1 pour mélanger des poussières de purge 2, qui peuvent arriver d'une trémie 3, à de l'eau 4 qui arrive par un conduit 5, (b) des moyens de séparation 6 du mélange 7 ainsi produit, qui quitte les moyens de mélange 1, en une phase liquide 8 et une phase solide 9 et, (c) des moyens de neutralisation 10 de la phase liquide 8. De ces derniers sort une phase liquide 11 neutralisée.

Les moyens de séparation 6 peuvent comporter un tapis filtrant sans fin 13 connu en soi.

Dans une forme de réalisation de l'invention (figure 1), des moyens 14 de lavage à l'eau, par exemple par aspersion, du mélange produit 7 qui se trouve sur le tapis sans fin 13 et des moyens d'essorage 15 de ladite phase solide 9, par exemple par aspiration de la phase liquide 8 sous le tapis sans fin 13, peuvent être associés aux moyens de séparation 6. Dans cette forme de réalisation, des moyens de récupération 16 de la phase liquide 8 précitée en combinaison avec l'eau d'essorage 17 collectent ensemble celles-ci pour les amener aux moyens de neutralisation 10.

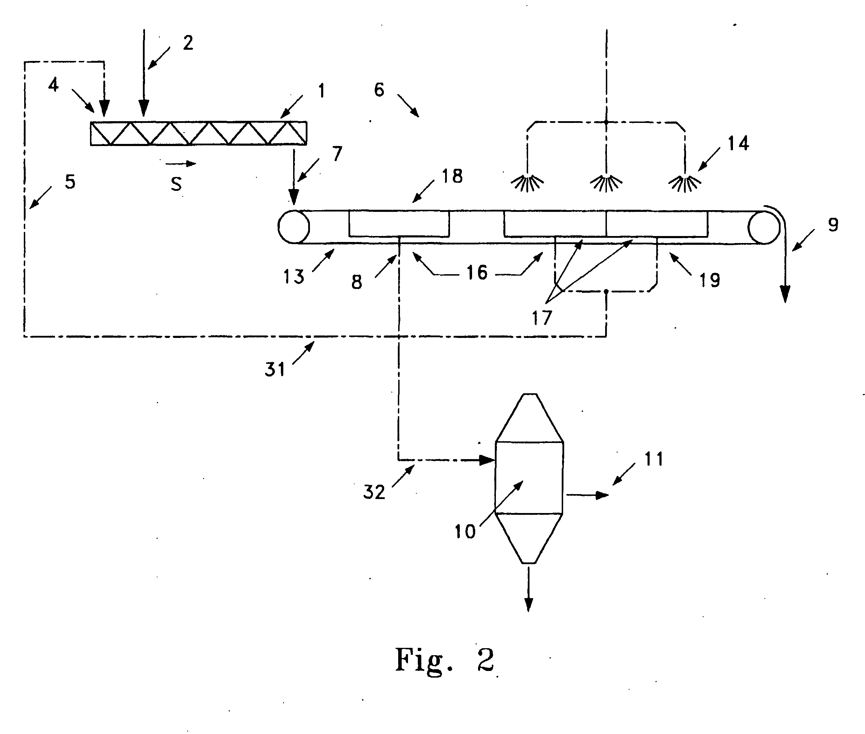

Dans une autre forme de réalisation de l'invention (figure 2), les moyens de récupération 16 peuvent comporter, disposée entre les moyens de mélange 1 et les moyens de lavage 14, une section de récupération 18 de la phase liquide 8 proprement dite et, associée aux moyens de lavage 14, une section de récupération 19 séparée de l'eau d'essorage 17.

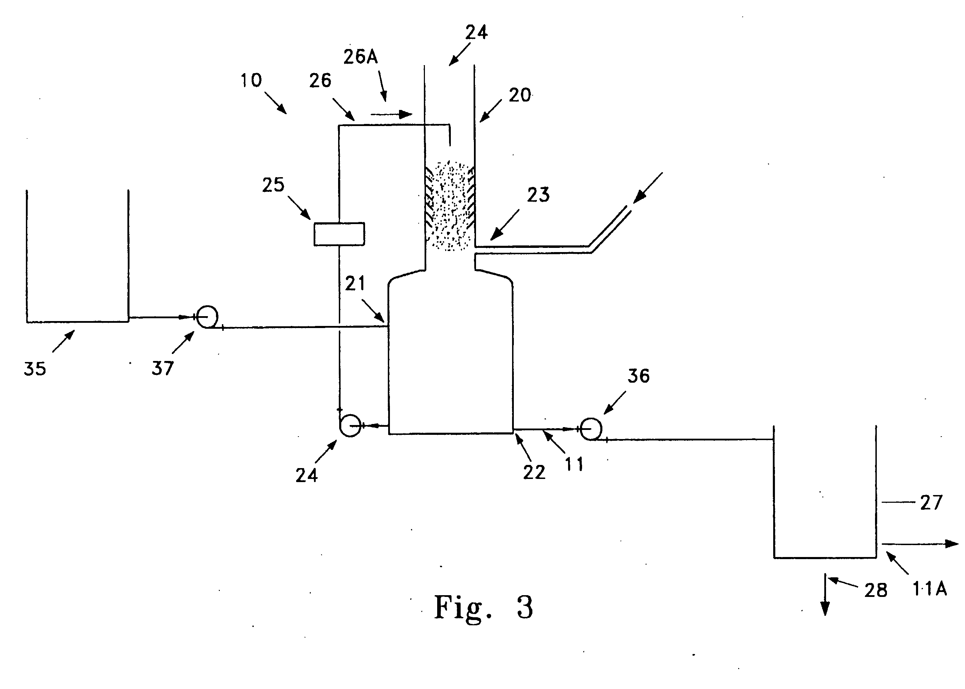

En fait, les moyens de neutralisation 10 (figure 3) peuvent comporter par exemple une tour de lavage à contre-courant 20, par contact direct entre un liquide et un gaz, qui comprend, d'une part, une entrée 21 pour la phase liquide 8 proprement dite et, le cas échéant, pour l'eau d'essorage 17, et une sortie 22 pour l'eau neutralisée 11 et, d'autre part, une entrée 23 et une sortie 24 pour un gaz comportant, au moins à l'entrée 23, du CO₂.

Il peut être prévu de plus, sous la forme d'une pompe 24, de conduites appropriées et de moyens de mesure de pH 25 connus, des moyens de reprise 26 de la phase liquide 8 proprement dite, et le cas échéant de l'eau d'essorage 17, passée(s) à contre-courant, ces moyens de reprise 26 étant agencés pour réintroduire à contre-courant (suivant la flèche 26A) la phase liquide 8 dans la tour de lavage 20.

Avantageusement, le dispositif de l'invention peut comprendre de plus des moyens de décantation 27 de la phase liquide 8 ou, de préférence (figure 3), de la phase liquide neutralisée 11 pour en précipiter des résidus solides 28 résultant de ladite neutralisation et obtenir un fluide épuré 11A.

Des moyens (non représentés) pour réintroduire dans le processus de fabrication précité au moins une partie de ladite phase solide 9 et, le cas échéant, des résidus solides 28 précipités sont de préférence prévus pour compléter le dispositif de l'invention. Il peut s'agir à cet effet de bandes transporteuses, de silos, de véhicules, etc.

Suivant un mode de réalisation des moyens de mélange 1, ceux-ci comportent un système de vis d'Archimède (non représenté) comprenant, dans un tube de mélange, une vis externe dont le filet est agencé pour faire avancer le mélange 7 dans un sens d'avance S vers les moyens de séparation 6 et une vis interne coaxiale à la vis externe et dont le filet est agencé pour faire avancer le mélange 7 en sens inverse du sens d'avance S.

Dans le cas de la forme de réalisation de la figure 2, il peut être prévu, sous forme de conduites 31 adéquates, des moyens 31 pour amener aux moyens de mélange 1, en tant qu'eau 4 à mélanger à la poussière de purge 2, l'eau d'essorage 17 captée par la section de récupération séparée 19.

Dans ce même cas, des conduites 32 peuvent raccorder la section de récupération 18 aux moyens de neutralisation 10 pour y amener la phase liquide 8 proprement dite.

Le procédé de l'invention, pour le traitement de poussières de purge 2 décrites ci-dessus, comprend (figure 1 ou 2) :
- un mélange en 1 des poussières de purge 2 à de l'eau 4,
- une séparation en 6 du mélange 7 ainsi obtenu en une phase liquide 8, comprenant l'eau et entre autres les composés chlorés solubles, et une phase solide 9 composée des matières non solubles dans l'eau, dont les composés calciques réhydratés, et
- une neutralisation en 10 de la phase liquide 8 jusqu'à obtenir un pH souhaité.

L'étape de séparation est avantageusement une filtration du mélange 7 d'eau et de poussières de purge 2.

Dans un mode de réalisation du procédé de l'invention (figure 1), on peut organiser, au cours de l'étape de séparation en 6 des phases liquide 8 et solide 9, un lavage à l'eau et un essorage de la phase solide 9 pour en retirer davantage les composés chlorés solubles, et une récupération de l'eau d'essorage 17 ainsi obtenue, mélangée à la phase liquide 8 précitée, en vue d'une neutralisation susdite en commun.

Dans un autre mode de réalisation du procédé de l'invention (figure 2), après une séparation au moins partielle susdite en 18 des phases liquide 8 et solide 9, on prévoit un lavage à l'eau en 14 et un essorage en 19 de la phase solide 9 pour en retirer davantage les composés chlorés solubles qu'elle contiendrait encore. De plus, on peut organiser alors une récupération séparée de l'eau d'essorage 17 afin de la réintroduire au moins en partie en tant qu'eau 4 pour l'étape de mélange en 1 à la poussière de purge 2.

Dans le procédé de l'invention, l'étape de neutralisation, ainsi que d'autres étapes, peut être organisée par lots de produit à traiter mais également en un ou des processus en continu selon le dispositif choisi. L'homme de métier pourra choisir le matériel nécessaire pour le dispositif selon qu'il est préféré qu'une étape soit réalisée lot par lot ou en continu.

Il doit être entendu que l'invention n'est nullement limitée aux formes de réalisation décrites et que bien des modifications peuvent être apportées à ces dernières sans sortir du cadre des revendications.

Ainsi, au cas où, comme lors de la fabrication de clinker, le processus de fabrication dégage un gaz contenant du CO₂, le procédé de l'invention comprend avantageusement pour la neutralisation précitée en 10, par exemple dans une tour de lavage 20 (figure 3), un passage à contre-courant, dans un écoulement dudit gaz, de la phase liquide 8 et, le cas échéant, d'au moins une partie de l'eau d'essorage 17.

Avantageusement, mais à titre d'exemple seulement, le liquide passé à contre-courant dans l'écoulement de gaz peut être récupéré à la base de la tour de lavage par une pompe 24 et analysé par un pHmètre 25 pour être réintroduit à contre-courant, jusqu'à ce que son pH atteigne une valeur souhaitée. En attendant, du liquide venant des moyens de récupération 16 peut être stocké dans un réservoir tampon 35. Dès que le pH souhaité est obtenu, une pompe 36 peut vider la tour de lavage 20 de la phase liquide neutralisée 11 et envoyer celle-ci dans un autre réservoir tampon 27 pour une décantation éventuelle. Ensuite; une pompe 37 peut faire passer la phase liquide 8 à neutraliser du réservoir tampon 35 dans la tour de lavage 20 pour neutraliser un nouveau volume de phase liquide 8.

D'un autre côté, la phase liquide neutralisée 11, peut être soumise à une étape de précipitation des résidus solides 28 qui résultent de ladite neutralisation, afin d'obtenir un fluide épuré 11A. A cet effet, un floculant peut être ajouté à cette phase liquide.

Le cas échéant, le procédé de l'invention comprend avantageusement une réintroduction, dans le processus de fabrication susdit, d'au moins une partie de ladite phase solide 9 et éventuellement des résidus solides 28 précipités.

La phase liquide 8 et/ou l'eau d'essorage 17 non neutralisée, étant donné leur teneur en chlore, peuvent éventuellement être utilisées pour nettoyer le tapis filtrant 13 en y attaquant des particules de gypse incrustantes.

### Liste des figures

- S: sens d'avance
- 1: moyens de mélange
- 2: poussières de purge
- 3: trémie
- 4: eau
- 5: conduit
- 6: moyens de séparation
- 7: mélange
- 8: phase liquide
- 9: phase solide
- 10: moyens de neutralisation
- 11: phase liquide neutralisée
- 11A: fluide épuré
- 13: tapis filtrant sans fin
- 14: moyens de lavage
- 15: moyens d'essorage
- 16: moyens de récupération
- 17: eau d'essorage
- 18: section de récupération de 8
- 19: section de récupération séparée, de 17
- 20: tour de lavage à contre-courant
- 21: entrée
- 22: sortie
- 23: entrée
- 24: sortie
- 25: moyens de mesure de pH
- 26: moyens de reprise
- 26A: flèche
- 27: moyens de décantation
- 28: résidus solides
- 29: collecte de 9
- 31: conduites
- 32: conduites
- 35: réservoir tampon
- 36: pompe
- 37: pompe

## Revendications

1. Procédé de traitement d'une matière solide comprenant entre autres des composés calciques, le dit procédé comprenant une formation d'un mélange (7) de la matière solide (2) et d'eau (4), **caractérisé en ce que** la matière solide est constituée de poussières de purge (2) issues d'un processus de fabrication de clinker qui contiennent entre autres des composés chlorés solubles et **en ce que** le procédé comprend en outre:
- une séparation dudit mélange (7) en une phase liquide (8), comprenant l'eau (4) et entre autres les composés chlorés solubles extraits des poussières de purge (2), et une phase solide (9) composée des matières non solubles dans l'eau, dont les composés calciques réhydratés,
- une réintroduction d'au moins une partie desdits composés calciques réhydratés dans ledit procédé de fabrication dudit clinker, et
- une neutralisation de la phase liquide (8) séparée jusqu'à obtenir un pH souhaité par une mise en contact de la phase liquide (8) avec un écoulement de gaz contenant du CO₂ résultant dudit processus de fabrication.

2. Procédé suivant la revendication 1, **caractérisé en ce que** l'étape de séparation est une filtration du mélange d'eau (4) et de poussières de purge (2).

3. Procédé suivant l'une ou l'autre des revendications 1 et 2, **caractérisé en ce qu'**il comporte en outre :
- au cours de l'étape de séparation des phases liquide (8) et solide (9), un lavage à l'eau et un essorage de la phase solide (9) pour en retirer davantage les composés chlorés solubles, et
- une récupération de l'eau d'essorage (17) mélangée à la phase liquide (8) précitée, en vue de la neutralisation susdite.

4. Procédé suivant l'une ou l'autre des revendications 1 et 2, **caractérisé en ce qu'**il comporte en outre :
- après une séparation au moins partielle susdite des phases liquide (8) et solide (9), un lavage à l'eau et un essorage de la phase solide (9) pour en retirer davantage les composés chlorés solubles, et
- une récupération séparée de l'eau d'essorage (17) pour la réintroduire au moins en partie en tant qu'eau (4) pour l'étape de mélange à la poussière de purge (2).

5. Procédé suivant l'une quelconque des revendications 1 à 4, **caractérisé en ce que**, le processus de fabrication susdit dégageant un gaz contenant du CO₂, le procédé comprend pour la neutralisation une mise en contact, dans un écoulement dudit gaz d'au moins une partie de l'eau d'essorage (17).

6. Procédé suivant la revendication 5, **caractérisé en ce qu'**il comprend une reprise de l'eau mise en contact pour la remettre en contact avec l'écoulement de gaz, jusqu'à ce que le pH atteigne une valeur souhaitée.

7. Procédé suivant l'une quelconque des revendications 1 à 6, **caractérisé en ce qu'**il comprend, dans la phase liquide neutralisée (11), une précipitation des résidus solides (28) résultant de ladite neutralisation.

8. Procédé suivant l'une quelconque des revendications 1 à 7, **caractérisé en ce qu'**il comprend une réintroduction, dans le processus de fabrication de clinker, d'au moins une partie des résidus solides (28) précipités.

9. Dispositif pour la mise en oeuvre du procédé de traitement de matière solide (2), suivant l'une quelconque des revendications 1 à 8, comprenant des moyens de mélange (1) des poussières de purge (2) à de l'eau (4), **caractérisé en ce qu'**il comprend en outre
- des moyens de séparation (6) du mélange (7) en une phase liquide (8), comprenant l'eau et entre autres les composés chlorés solubles, et une phase solide (9) composée des matières non solubles dans l'eau, dont les composés calciques réhydratés,
- des moyens de réintroduction, dans le processus de fabrication dudit clinker, d'au moins une partie de ladite phase solide (9) comprenant lesdits composés calciques réhydratées
- des moyens de neutralisation (10) de la phase liquide séparée (8) jusqu'à obtenir un pH souhaité comprenant une entrée pour la phase liquide (21) et une entrée (23) pour le gaz contenant du CO₂ résultant du procédé de fabrication du clinker.

10. Dispositif suivant la revendication 9, **caractérisé en ce que** les moyens de séparation (10) comportent un tapis filtrant sans fin (13).

11. Dispositif suivant l'une ou l'autre des revendications 9 et 10, **caractérisé en ce qu'**il comporte en outre :
- des moyens de lavage à l'eau (14) de ladite phase solide (9) et des moyens d'essorage (15) de celle-ci, et
- des moyens de récupération (16) de la phase liquide (8) précitée et de l'eau d'essorage (17).

12. Dispositif suivant la revendication 11, **caractérisé en ce que** les moyens de récupération (16) de la phase liquide (8) précitée comportent en outre :
- disposée entre les moyens de mélange (1) et les moyens de lavage (14), une section de récupération (18) de la phase liquide (8) proprement dite, et
- associée aux moyens de lavage (14), une section de récupération (19) de l'eau d'essorage (17) chargée de composants chlorés solubles.

13. Dispositif suivant l'une quelconque des revendications 9 à 12, **caractérisé en ce que** les moyens de neutralisation (10) comportent une tour de lavage (20), par contact direct entre liquide et gaz, qui comprend :
- une entrée (21) pour la phase liquide (8) proprement dite et, le cas échéant, pour l'eau d'essorage (17) chargée de composants chlorés solubles,
- une sortie (22) pour l'eau neutralisée (11), et
- une entrée (23) et une sortie (24) pour un gaz comportant, au moins à l'entrée (23), du CO₂.

14. Dispositif suivant la revendication 13, **caractérisé en ce qu'**il comprend des moyens de reprise (26) de la phase liquide (8) proprement dite, et le cas échéant de l'eau d'essorage (17), chargée(s) de composants chlorés solubles, mise(s) en contact, ces moyens de reprise (26) étant agencés pour la ou les remettre en contact dans les moyens de neutralisation (10) jusqu'à ce que le pH atteigne une valeur souhaitée.

15. Dispositif suivant l'une quelconque des revendications 9 à 14, **caractérisé en ce qu'**il comprend des moyens de décantation (27) de la phase liquide neutralisée (11) pour en précipiter des résidus solides (28) résultant de ladite neutralisation.

16. Dispositif suivant l'une quelconque des revendications 9 à 15, **caractérisé en ce qu'**il comprend des moyens de réintroduction, dans le processus de fabrication, d'au moins une partie des résidus solides (28) précipités.

## Patentansprüche

1. Verfahren zum Behandeln eines Feststoffs, der unter anderem kalkhaltige Verbindungen enthält, wobei das Verfahren ein Bilden eines Gemischs (7) aus Feststoff (2) und Wasser (4) umfasst, **dadurch gekennzeichnet, dass** der Feststoff aus Entlüftungsstaub (2) besteht, der aus einem Zementherstellungsverfahren stammt, und der unter anderem lösliche chlorhaltige Verbindungen umfasst, und dadurch, dass das Verfahren ferner Folgendes umfasst:
- eine Trennung des Gemischs (7) in eine flüssige Phase (8), die das Wasser (4) enthält, und unter anderem die löslichen chlorhaltigen Verbindungen, die aus dem Entlüftungsstaub (2) extrahiert werden, und eine Feststoffphase (9), die aus nicht wasserlöslichen Stoffen besteht, darunter die wiederbefeuchteten kalkhaltigen Verbindungen,
- eine Neueinführung mindestens eines Teils der wiederbefeuchteten kalkhaltigen Verbindungen in das Zementherstellungsverfahren, und
- eine Neutralisierung der getrennten flüssigen Phase (8), bis ein erwünschter pH durch ein Inberührungbringen der flüssigen Phase (8) mit einem Gasstrom, der CO₂ enthält, das aus dem Herstellungsverfahren hervorgeht, erzielt wird.

2. Verfahren nach Anspruch 1, **dadurch gekennzeichnet, dass** der Trennungsschritt eine Filterung des Gemischs aus dem Wasser (4) und dem Entlüftungsstaub (2) ist.

3. Verfahren nach einem der Ansprüche 1 und 2, **dadurch gekennzeichnet, dass** es ferner Folgendes umfasst:
- während des Trennungsschritts der flüssigen (8) und der Feststoffphase (9) ein Waschen mit Wasser und ein Schleudern der Feststoffphase (9), um daraus mehr lösliche chlorhaltige Verbindungen zu entziehen, und
- eine Rückgewinnung des Schleuderwassers (17), das mit der flüssigen Phase (8) zur Neutralisierung gemischt wird.

4. Verfahren nach einem der Ansprüche 1 und 2, **dadurch gekennzeichnet, dass** es ferner Folgendes umfasst:
- nach einer mindestens teilweisen Trennung der flüssigen (8) und der Feststoffphase (9), ein Waschen mit Wasser und ein Schleudern der Feststoffphase (9), um daraus mehr lösliche chlorhaltige Verbindungen zu entziehen, und
- eine getrennte Rückgewinnung des Schleuderwassers (17), um es zumindest teilweise als Wasser (4) für den Schritt des Mischens mit dem Entüftungsstaub (2) wieder einzuführen.

5. Verfahren nach einem der Ansprüche 1 und 4, **dadurch gekennzeichnet, dass** das Herstellungsverfahren ein Gas freisetzt, das CO₂ enthält, wobei das Verfahren zum Neutralisieren ein Inberührungbringen mindestens eines Teils des Schleuderwassers (17)in einem Strom des Gases umfasst.

6. Verfahren nach Anspruch 5, **dadurch gekennzeichnet, dass** es eine Wiederaufnahme des in Berührung gebrachten Wassers umfasst, um es mit dem Gastrom in Berührung zu bringen, bis der pH einen erwünschten Wert erreicht.

7. Verfahren nach einem der Ansprüche 1 bis 6, **dadurch gekennzeichnet, dass** es in der neutralisierten flüssigen Phase (11) eine Ausfällung der Restfeststoffe (28) umfasst, die sich bei der Neutralisierung ergeben.

8. Verfahren nach einem der Ansprüche 1 bis 7, **dadurch gekennzeichnet, dass** es eine Wiedereinführung mindestens eines Teils der ausgefällten Restfeststoffe (28) in das Zementherstellverfahren umfasst.

9. Vorrichtung zur Anwendung des Verfahrens zum Behandeln des Feststoffs (2) nach einem der Ansprüche 1 bis 8, das Mittel (1) zum Mischen des Entlüftungsstaubs (2) mit dem Wasser (4) umfasst, **dadurch gekennzeichnet, dass** es ferner Folgendes umfasst:
- Trennmittel (6) des Gemischs (7) in eine flüssige Phase (8), die das Wasser, und unter anderem lösliche chlorhaltige Verbindungen enthält, und in eine Feststoffphase (9), die aus nicht in Wasser löslichen Feststoffen besteht, darunter die wiederbefeuchteten kalkhaltigen Verbindungen,
- Mittel zum Wiedereinführen in das Herstellungsverfahren des Zements mindestens eines Teil der flüssigen Phase (9), die die wiederbefeuchteten kalkhaltigen Verbindungen enthält,
- Mittel zum Neutralisieren (10) der getrennten flüssigen Phase (8) bis zum Erzielen eines erwünschten pH, die einen Einlass für die flüssige Phase (21) und einen Einlass (23) für das das CO₂ enthaltende Gas, das sich aus dem Zementherstellungsverfahren ergibt, umfassen.

10. Vorrichtung nach Anspruch 9, **dadurch gekennzeichnet, dass** die Trennmittel (10) eine Endlosfiltermatte (13) umfassen.

11. Vorrichtung nach einem der Ansprüche 9 und 10, **dadurch gekennzeichnet, dass** sie ferner Folgendes umfasst:
- Mittel zum Waschen mit Wasser (14) der Feststoffphase (9) und ihrer Schleudermittel (15), und
- Mittel zum Zurückgewinnen (16) der oben genannten flüssigen Phase (8) und des Schleuderwassers (17).

12. Vorrichtung nach Anspruch 11, **dadurch gekennzeichnet, dass** die Rückgewinnungsmittel (16) der flüssigen Phase (8) ferner Folgendes umfassen:
- zwischen den Mischmitteln (1) und den Waschmitteln (14) angeordnet einen Rückgewinnungsabschnitt (18) der eigentlichen flüssigen Phase (8) und
- verbunden mit den Waschmitteln (14) einen Rückgewinnungsabschnitt (19) des Schleuderwassers (17), das lösliche chlorhaltige Verbindungen enthält.

13. Vorrichtung nach einem der Ansprüche 9 bis 12, **dadurch gekennzeichnet, dass** die Neutralisierungsmittel (10) einen Waschturm (20) durch direkten Kontakt zwischen Flüssigkeit und Gas umfassen, der Folgendes umfasst:
- einen Einlass (21) für die eigentliche flüssige Phase (8) und, gegebenenfalls, für das Schleuderwasser (17) mit löslichen chlorhaltigen Verbindungen,
- einen Auslass (22) für das neutralisierte Wasser (11) und
- einen Einlass (23) und einen Auslass (24) für ein Gas, das zumindest am Eingang (23) CO₂ enthält.

14. Vorrichtung nach Anspruch 13, **dadurch gekennzeichnet, dass** sie Wiederaufnahmemittel (26) der eigentlichen flüssigen Phase (8) und gegebenenfalls des Schleuderwassers (17), die lösliche chlorhaltige Verbindungen enthalten, umfasst, die in Berührung gebracht werden, wobei diese Wiederaufnahmemittel (26) eingerichtet sind, um sie oder beide mit den Neutralisierungsmitteln (10) in Berührung zu bringen, bis der pH einen erwünschten Wert erreicht.

15. Vorrichtung nach einem der Ansprüche 9 bis 14, **dadurch gekennzeichnet, dass** sie Absetzmittel (27) der neutralisierten flüssigen Phase (11) umfasst, um daraus Feststoffreste (28) auszufällen, die sich aus der Neutralisierung ergeben.

16. Vorrichtung nach einem der Ansprüche 9 bis 15, **dadurch gekennzeichnet, dass** sie Mittel zum Wiedereinführen mindestens eines Teils der ausgefällten Feststoffreste (28) in das Herstellungsverfahren umfasst.

## Claims

1. Method for treating a solid material comprising inter alia calcium compounds, said method comprising formation of mixture (7) of the solid material (2) and water (4), **characterized in that** the solid material consists of vent fines (2) from a clinker manufacturing process, which contain inter alia soluble chlorine compounds, and **in that** the method further comprises:
- separation of said mixture (7) into a liquid phase (8), comprising the water (4) and inter alia the soluble chlorine compounds extracted from the vent fines (2), and a solid phase (9) composed of the materials insoluble in water, including the rehydrated calcium compounds,
- reintroduction of at least a portion of said rehydrated calcium compounds into said manufacturing process of said clinker, and
- neutralization of the separated liquid phase (8) until the desired pH is obtained by contacting the liquid phase (8) with a stream of gas containing CO₂ resulting from said manufacturing process.

2. Method according to Claim 1, **characterized in that** the separation step is a filtration of the mixture of water (4) and vent fines (2).

3. Method according to either of Claims 1 and 2, **characterized in that** it further comprises:
- during the step of separating the liquid (8) and solid (9) phases, a water washing and a dewatering of the solid phase (9) to extract more of the soluble chlorine compounds therefrom, and
- recovery of the dewatering water (17) mixed with the aforementioned liquid phase (8), for the neutralization thereof.

4. Method according to either of Claims 1 and 2, **characterized in that** it further comprises:
- after at least partial aforementioned separation of the liquid (8) and solid (9) phases, a water washing and a dewatering of the solid phase (9) to extract more of the soluble chlorine compounds therefrom, and
- separate recovery of the dewatering water (17) in order to reintroduce it at least partially as water (4) for the step of mixing with the vent fines (2).

5. Method according to any one of Claims 1 to 4, **characterized in that**, since the aforementioned manufacturing process liberates a gas containing CO₂, the method comprises, for the neutralization, contacting, in a stream of said gas, of at least a portion of the dewatering water (17).

6. Method according to Claim 5, **characterized in that** it comprises recovery of the contacted water for recontacting with the gas stream, until the pH reaches a desired value.

7. Method according to any one of Claims 1 to 6, **characterized in that** it comprises, in the neutralized liquid phase (11), precipitation of the solid residues (28) resulting from said neutralization.

8. Method according to any one of Claims 1 to 7, **characterized in that** it comprises reintroduction of at least a portion of the precipitated solid residues (28) into the clinker manufacturing process.

9. Device for implementing the method for treating solid material (2), according to any one of Claims 1 to 8, comprising means (1) of mixing the vent fines (2) with water (4), **characterized in that** it further comprises:
- means (6) of separating the mixture (7) into a liquid phase (8), comprising the water and inter alia the soluble chlorine compounds, and a solid phase (9) composed of the materials insoluble in water, including the rehydrated calcium compounds,
- means of reintroducing, into the manufacturing process of said clinker, at least a portion of said solid phase (9) comprising said rehydrated calcium compounds,
- means (10) of neutralizing the separated liquid phase (8) until a desired pH is obtained, comprising an inlet for the liquid phase (21) and an inlet (23) for the gas containing CO₂ resulting from the clinker manufacturing process.

10. Device according to Claim 9, **characterized in that** the separating means (10) comprise an endless filter belt (13).

11. Device according to either of Claims 9 and 10, **characterized in that** it further comprises:
- means (14) of water washing said solid phase (9) and dewatering means (15) thereof, and
- means (16) of recovering the aforementioned liquid phase (8) and of the dewatering water (17).

12. Device according to Claim 11, **characterized in that** the means (16) of recovering the aforementioned liquid phase (8) further comprise:
- disposed between the mixing means (1) and the washing means (14), a section (18) for recovering the liquid phase (8) proper, and
- associated with the washing means (14), a section (19) for recovering the dewatering water (17) containing soluble chlorine compounds.

13. Device according to any one of Claims 9 to 12, **characterized in that** the neutralizing means (10) comprise a scrubber (20) for direct contact between liquid and gas, which comprises:
- an inlet (21) for the liquid phase (8) proper and, if applicable, for the dewatering water (17) containing soluble chlorine compounds,
- an outlet (22) for the neutralized water (11), and
- an inlet (23) and an outlet (24) for a gas which, at least at the inlet (23), comprises CO₂.

14. Device according to Claim 13, **characterized in that** it comprises recovery means (26) for recovering the liquid phase (8) proper, and if applicable of the dewatering water (17), containing soluble chlorine compounds, placed in contact, these recovery means (26) being arranged in order to recontact it or them in the neutralizing means (10) until the pH reaches a desired value.

15. Device according to any one of Claims 9 to 14, **characterized in that** it comprises settling means (27) for the neutralized liquid phase (11) to precipitate therefrom solid residues (28) resulting from said neutralization.

16. Device according to any one of Claims 9 to 15, **characterized in that** it comprises means of reintroducing, into the manufacturing process, at least a portion of the precipitated solid residues (28).
